# EUROPEAN PATENT APPLICATION

(11) **EP 1 993 242 A1**
(43) Date of publication of application: **19.11.2008**
(21) Application number: 07737395.9
(22) Date of filing: 26.02.2007
(51) Int. Cl.: H04L 12/56, H04L 12/28, H04Q 7/38

(54) **COMMUNICATION DEVICE CONNECTION APPARATUS**

(30) Priority: 06.03.2006 JP 2006059432
(71) Applicant: Sanden Corporation, Isesaki-shi, Gunma 372-8502 (JP)
(72) Inventor: IWAZAKI, Wataru, Isesaki-shi Gunma 3728502 (JP)
(74) Representative: Haley, Stephen
(86) International application number: PCT/JP2007/053543
(87) International publication number: WO 2007/102328

(57) **Abstract**

A connection adapter 1 is interposed between a host device 10 and a communication equipment 20. Upon receipt of a communication start TCP packet from the wireless packet communication network 40 after the establishment of a connection with a wireless packet communication network 40, the connection adapter 1 temporarily stores the TCP packet, and starts the connecting process with the host device 10. When the connecting process is completed, the connection adapter 1 transmits the temporarily stored communication start TCP packet to the host device 10 without delay.

## Description

### Technical field

The present invention relates to the field of telemetering used in such purposes as the collection of sales information from vending machines and to the field of telematics used in delivering traffic information to mobile objects and like purposes.

### Background art

Recently, telemetering and telematics for collecting and distributing information over a wireless packet communication network have become widespread. The telemetering originally is a generic term which refers to a system of reading a measured value by a measure via a communication line. However, it has been generally used as a term indicating not only reading data but also monitoring the operation of equipment and performing remote control. A typical example of telemetering is a sales management system of vending machines, a use amount management system of gas, water supply, etc., or a management system in a parking lot without human attendant, etc. For a sales management system of vending machines, refer to the patent document 1. The telematics refers to providing information in real time by combining a mobile object such as an automobile with a communication system. A typical example of telematics is a vehicle-mounted information system etc. for providing in real time a terminal provided for a vehicle with traffic information and navigation information.

In the fields above, communication equipment for connection to a wireless packet communication network in a remote location and a host device using the communication equipment are arranged. The host device corresponds to Data Terminal Equipment (DTE). The communication equipment corresponds to Data Circuit-terminating Equipment (DCE).

For example, in the sales management system of vending machines, the control device for controlling the sales and the temperature in the machine corresponds to the host device. Each host device is periodically or arbitrarily connected to a predetermined network through communication equipment, and to a predetermined managing computer over the network. The host device connected to the managing computer transmits various types of data to be managed.

Patent Document 1: Japanese Patent Publication No. 2003-51056

### Disclosure of the invention

### Problems to be solved by the invention

However, in the conventional system, when communications are started from a managing computer to a host device, a long time may be required before starting the communications or a connection may not be successfully made.

For an example, a conventional flow rate monitor system for a sewage system is described below. In this system, a TCP/IP is used as a communication protocol between a host device and a managing computer. The managing computer transmits a communication start TCP packet addressed to the host device to the wireless packet communication network to start communication with the host device. The wireless packet communication network refers to the destination address of the communication start TCP packet, and notifies the host device corresponding to the destination address of a message. The message is notified through a messaging service provided by the wireless packet communication network. The host device receives the message and performs a connection to the wireless packet communication network.

The notifying process for the message and the connecting process to the wireless packet communication network can require few to a dozen seconds. Therefore, a communication start TCP packet first transmitted from the managing computer is discarded due to time-out, and the managing computer attempts retransmission of the communication start TCP packet several times. That is, the communication start TCP packet actually received by the host device is received after several retransmissions. The retransmission interval of a TCP packet is generally set longer each time the retransmission is repeated. For example, the retransmission intervals are set to 3 seconds, 6 seconds, and 12 seconds. Therefore, there can be a case in which several seconds are required to perform retransmission of a communication start TCP packet although the connecting process to the wireless packet communication network has been completed. In addition, the retransmission frequency of a TCP can reach the upper limit until the connecting process is completed, thereby failing in establishing a TCP connection.

The present invention has been mode to consider the above-mentioned problems, and has an object of shortening the processing time from a communication start request to a start of the communication.

### Means for solving the problems

To attain the above-mentioned object, the present application propose a connection adapter for communication device including: a first interface for connection to communication equipment for a wireless packet communication network; a second interface for connection to a host device for performing communications using a TCP/IP through the communication equipment; a line control unit for controlling a line between the host device and the wireless packet communication network; and a communication control unit for relaying the communication by the host device using the communication equipment. The connection adapter for communication device is characterized in that: upon receipt of a communication start TCP packet addressed to the host device from the wireless packet communication network after the establishment of the connection to the wireless packet communication network, the line control unit (a) temporarily stores the communication start TCP packet in predetermined storage means, (b) notifies the host device of the reception, (c) performs a response process on behalf of the wireless packet communication network in response to the connecting process to be started by the host device, and (d) transmits the communication start TCP packet stored in the storage means to the host device when the connecting process by the host device is completed.

In the present invention, the host device performs a connection to the wireless packet communication network through the connection adapter. Upon receipt of a communication start TCP packet from the wireless packet communication network after a connection to the wireless packet communication network is established, the connection adapter temporarily stores the TCP packet, and starts a connecting process to the host device. When the connection adapter completes the connecting process, the device transmits the temporarily stored communication start TCP packet to the host device without delay. Therefore, even if the retransmission interval between a communication start TCP packet received by the connection adapter and a next communication start TCP packet is long, the host device receives the communication start TCP packet upon completion of the preparation for the communication, thereby successfully shortening the time to the start of communications.

The connecting process to the wireless packet communication network by the connection adapter is performed in, for example, the following cases. That is, when the connection adapter receives a message from the messaging service in the wireless packet communication network, the source of the message is designated from the message, and the connecting process to the wireless packet communication network is started so as to allow communications with the source. The communication start TCP packet is formed by a TCP packet having a SYN flag turned ON and an ACK flag OFF of the TCP header.

### Advantages of the invention

As described above, according to the present invention, even if the retransmission interval between the communication start TCP packet received by the connection adapter and the next communication start TCP packet is long, the host device can receive the communication start TCP packet upon completion of the preparation for communications, thereby shortening the time to the start of the communications.

### Brief description of the drawings

Figure 1 shows the configuration of a communication system;
Figure 2 shows a network upon which a host device etc is based;
Figure 3 is an explanatory view of an example of address management table;
Figure 4 shows a network of a system according to an embodiment of the present invention;
Figure 5 shows the configuration of a connection adapter;
Figure 6 is a block diagram showing the function of a main control unit of a connection adapter;
Figure 7 is an explanatory view of an example of the setting information in the connection adapter;
Figure 8 is an explanatory view of the sequence of using a network connection service as a presumption and starting communications from a host device;
Figure 9 is an explanatory view of the sequence of using a network connection service as a presumption and starting communications from a managing computer;
Figure 10 is an explanatory view of the sequence of starting communications from a host device according to an embodiment of the present invention;
Figure 11 is an explanatory view of the address converting process;
Figure 12 is an explanatory view of the sequence of starting communications from a managing computer according to an embodiment of the present invention;
Figure 13 is an explanatory view of the sequence of starting communications from a managing computer according to an embodiment of the present invention; and
Figure 14 is an explanatory view of an address converting process.

### Description of symbols

1 ... connection adapter for communication device, 120 ... main control unit, 121 ... line control unit, 122 ... communication control unit, 10, 11 ... host device, 20, 25, 26 ... communication module, 40, 45, 46 ... wireless packet communication network, 42 ... messaging server, 43 ... address management server, 50 ... in-house LAN, 51, 52 ... managing computer, 60 ... network router, 63 ... line control unit, 64 ... communication control unit, 65 ... setting data storage unit, 65a ... host device information table, 65b ... address conversion table

### Best mode for carrying out the invention

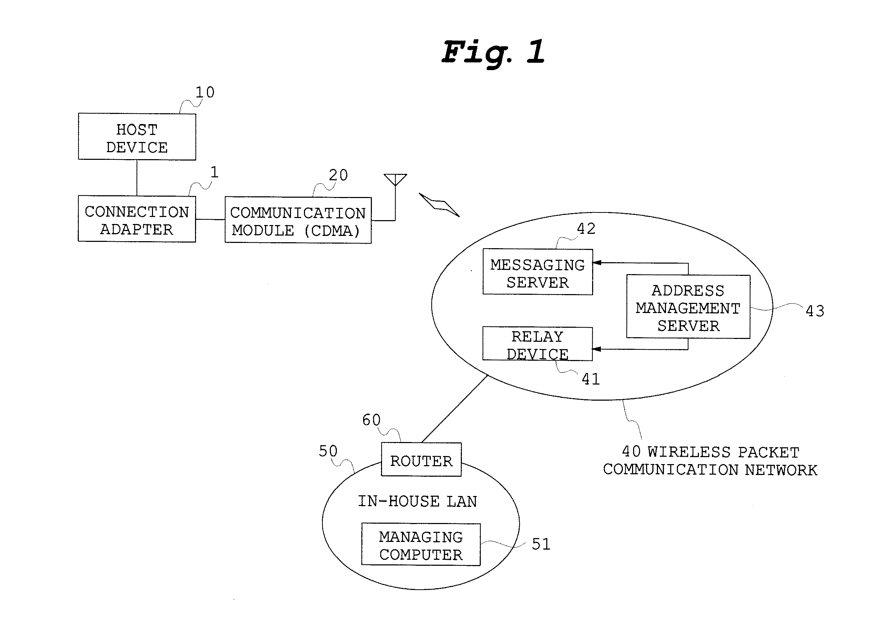

The communication system according to an embodiment of the present invention is described below with reference to the drawings. Figure 1 shows the configuration of a telemetering system using the communication system according to the present invention.

This system aims at providing a network environment obtained by connecting a host device 10 of, for example, a control device of a vending machine to an in-house LAN 50 over a wireless packet communication network 40 as shown in Figure 1. It is assumed that the host device 10 and a terminal (in the example shown in Figure 1, a managing computer 51 of a vending machine etc.) in the in-house LAN 50 is set for a network connection service for assigning a fixed IP address. The main object of the present system is to allow the wireless packet communication network 40 to use a network connection service for assigning a dynamic IP address to a connection terminal without reforming a terminal in the host device 10 and the in-house LAN 50. To solve the problem, the present system realizes the following two points. That is, (a) a terminal in the in-house LAN 50 can start communications to the host device 10, and (b) in the communications started by the host device 10, the host device 10 can be identified. The communication system is described below in detail.

The host device 10 corresponds to Data Terminal Equipment (DTE). The host device 10 is designed to correspond to a specific carrier and a network connection service provided by the carrier. Specifically, it is assumed that the host device 10 uses a network connection service of assigning a fixed IP address to a connection terminal. In addition, the host device 10 is designed to connect a communication module corresponding to the service, and correspond to a connection protocol, an authentication protocol, etc. corresponding to the service.

The network connection service upon which the host device 10 is based is described below. In the network connection service, a telephone number is assigned to a communication module in advance by a carrier. In the wireless packet communication network provided by the network connection service is provided with a relay device for performing line control, packet relay, etc. In the relay device, a telephone number is assigned to an in-house LAN which is a connection destination network. Upon issue of a call to the telephone number of the relay device in the wireless packet communication network, a terminal having connected communication module makes a connection to a predetermined network such as an in-house LAN. A connection to the relay device is allowed only from a communication module having a telephone number assigned in advance.

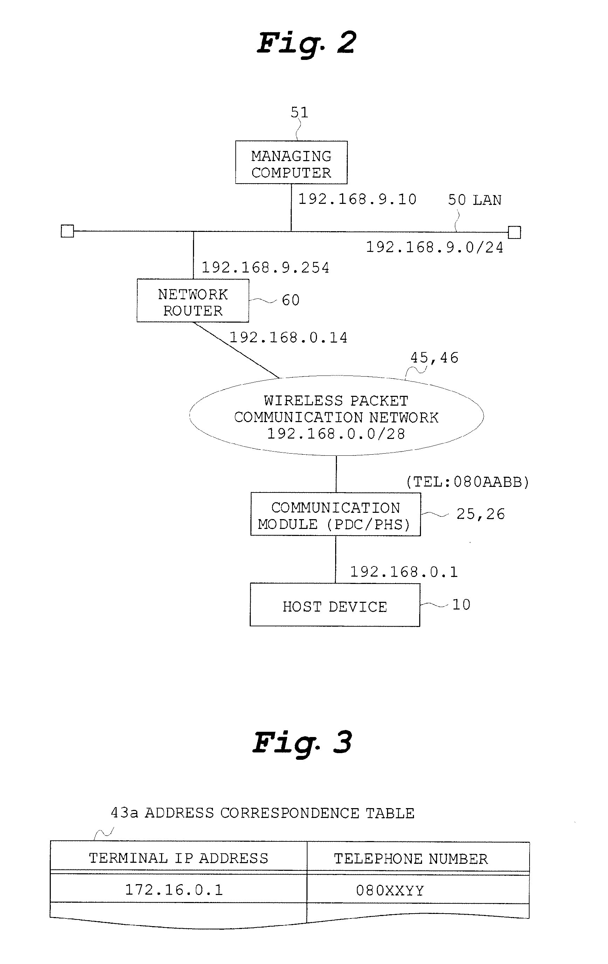

Figure 2 shows an example of a network using a network connection service upon which the host device 10 is based. As shown in Figure 2, the host device 10 performs a connection to wireless packet communication networks 45 and 46 configured by the network connection service using communication modules 25 and 26. In the present embodiment, the wireless packet communication network 45 and the communication module 25 are assumed to be in accordance with the PDC standard. The wireless packet communication network 46 and the communication module 26 are assumed to be in accordance with the PHS standard. Furthermore, in the service, an IP address belonging to the network of 192.168.0.0/28 is fixedly assigned to the WAN side interface of a network router 60 and the communication module 25. The host device 10 is connected to the LAN 50 in the terminal type network connection service. Therefore, the IP address assigned to the communication modules 25 and 26 is synonymy to the IP address assigned to the host device 10. It is assumed that, in the in-house LAN 50, a fixed IP address of each device is assigned so that it can belong to the network of 192.168.9.0/24. Upon receipt of a packet with an IP address in the 192.168.0.0/28 from the in-house LAN 50, the network router 60 relays the packet to the wireless packet communication networks 45 and 46. On the other hand, upon receipt of a packet with an IP address in the 192.168.9.0/24 from the wireless packet communication networks 45 and 46, the network router 60 relays the packet to the in-house LAN 50. With the configuration, the managing computer 51 can start communications to a fixed IP address of the host device 10. In addition, the managing computer 51 can identify the host device 10 with reference to the source IP address of the communication from the host device 10.

The present invention is based on the use of the host device 10 and the managing computer 51 as they are, and it is assumed that a network system can be configured in the wireless packet communication network 40 provided by the network connection service in which a dynamic IP can be assigned.

Next, a network connection service used in an embodiment of the present invention, and in which a dynamic IP address is assigned is described below. In the network connection service, a telephone number is assigned in advance by a carrier to a communication module 20. The wireless packet communication network 40 is provided with a relay device 41 for controlling a line and relaying a packet etc, as shown in Figure 1. A terminal to which the communication module 20 is connected is connected to the wireless packet communication network 40 by issuing a call with a predetermined special number assigned. Then, the terminal can be connected to the in-house LAN 50 which is a connection destination network by performing an authenticating process using a PAP (Password Authentication Protocol) with the relay device 41. In the above-mentioned PAP authentication, a connection destination network can be specified by including the information specifying a connection destination in a user name. In the network connection service, an IP address group in a predetermined range is allocated by a carrier to the wireless packet communication network 40, and an IP address contained in the IP address group is dynamically assigned by the IPCP (Internet Protocol Control Protocol) to the communication module 20.

An IP address assigned to the communication module 20 is predetermined. As shown in Figure 1, an address management server 43 is provided for the wireless packet communication network 40. The address management server 43 manages the telephone number of the connection terminal and a list of IP addresses to be distributed to the terminal having the telephone number. Specifically, as shown in Figure 3, the address management server 43 is provided with an address correspondence table 43a describing the correspondence between a telephone number and an IP address. In this connection service, the wireless packet communication network 40 acquires the telephone number of the communication module 20 when the communication module 20 is connected. Then, the IP address corresponding to the telephone number is acquired from the address correspondence table 43a, and the acquired IP address is distributed to the communication module 20. An IPCP is used for distributing the address. That is, according to the present embodiment, the dynamic IP assigning technique referred to as an IPCP is used, but the distributed IP address is predetermined. The address management server 43 provides a user with an interface for updating the address correspondence table 43a.

In addition, in this connection service, when the wireless packet communication network 40 receives an IP packet having the IP address corresponding to the terminal from the in-house LAN 50, and when the terminal is not connected to the wireless packet communication network 40, a messaging server 42 acquires a telephone number corresponding to the IP packet from the address management server 43. The wireless packet communication network 40 transmits a message to the telephone number. The messaging service is not a network connection service using a TCP/IP, but is implemented by a unique protocol using a wireless communication network. Thus, the terminal may recognize that there has been a connection request from the in-house LAN 50.

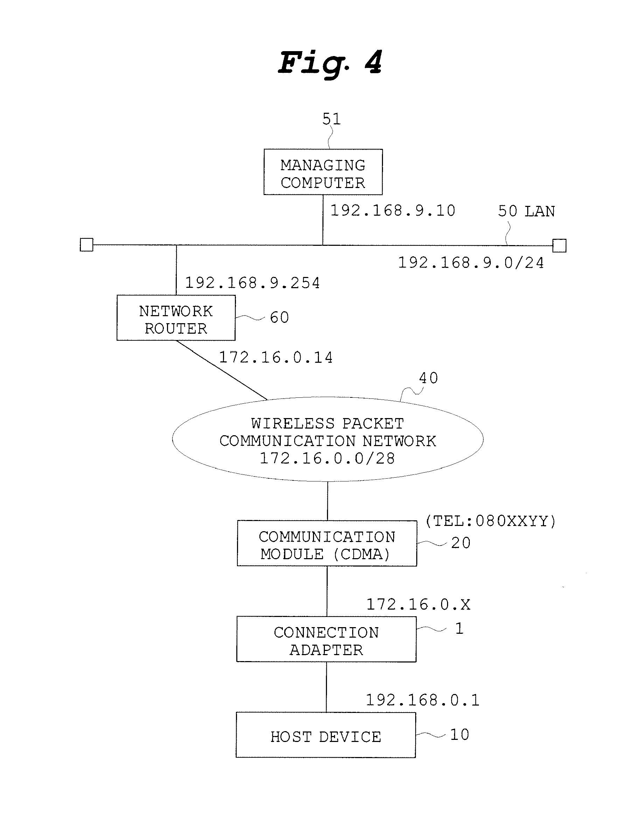

Next, the chart of the network of the system according to an embodiment of the present invention is described below with reference to Figure 4. Figure 4 shows the network of the present system. As shown in Figure 4, in this system, as with the network described above with reference to Figure 2, the in-house LAN 50 is assigned a fixed IP address belonging to 192.168.9.0/24. In addition, the host device 10 is assigned a fixed IP address belonging to 192.168.0.0/28. The wireless packet communication network 40 is assigned an address group of 172.16.0.0/28. The WAN side of the network router (hereinafter referred to simply as a "router") 60 at the boundary point between the wireless packet communication network 40 and the in-house LAN 50 is assigned a fixed IP address 172.16.0.14. The communication module 20 is assigned a dynamic address in 172.16.0.0/28 when it is connected to the wireless packet communication network 40 (in Figure 4, it is expressed by 172.16.0.X for convenience). A connection adapter 1 is connected to the LAN 50 with the terminal type network connection service. Therefore, the IP address of the connection adapter 1 is an IP address dynamically assigned to the communication module 20. In the present invention, in the above-mentioned network environment, communications can be started from the managing computer 51 in the in-house LAN 50 to the host device 10, and the host device 10 can be identified when the communications are started from the host device 10 to the managing computer 51.

Next, the connection adapter 1 is described below in detail. The connection adapter 1 connects plural types of host devices 10 corresponding to the Data Terminal Equipment (DTE) to plural types of communication equipment 20, 25, and 26 corresponding to the data circuit-terminating equipment (DCE). The connection adapter 1 according to an embodiment of the present invention corresponds to the communication module 20 in accordance with the CDMA standard, the communication module 25 in accordance with the PDC standard, and the communication module 26 in accordance with the PHS standard. Each of the communication modules 20, 25, and 26 is communication equipment connected to the wireless packet communication network 40, 45, and 46 configured by the respective carriers. Each carrier corresponds to a uniquely determined communication standard and communication protocol service. As described above, the host device 10 is designed to correspond to a specific carrier and a service provided by the carrier. Specifically, a communication module corresponding to the service is connected, and the connection protocol and the authentication protocol can be satisfied corresponding to the service.

The host device 10 according to an embodiment of the present invention can be directly connected to the communication module 25 in accordance with the PDC standard, and the communication module 26 in accordance with the PHS standard. Using the communication modules 25 and 26, it can be connected to the in-house LAN 50 over each of the wireless packet communication networks 45 and 46. The connection adapter 1 according to an embodiment of the present invention can be connected to the in-house LAN 50 through the wireless packet communication network 40 using the communication module 20 in accordance with the CDMA standard without modifying or changing the host device 10. The connection adapter 1 is described below in more detail.

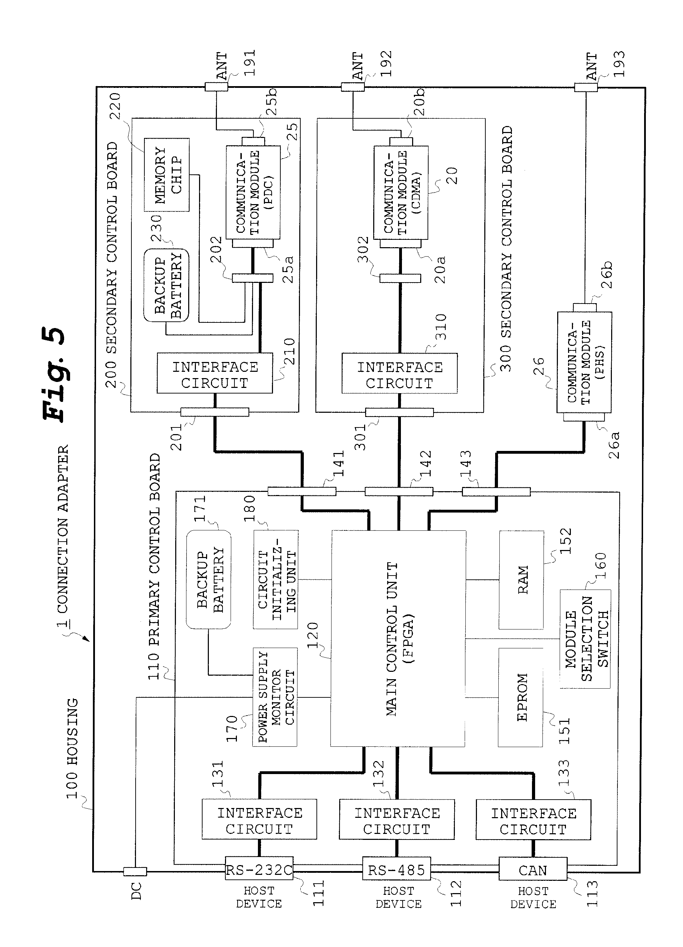

First, the configuration of the connection adapter 1 according to an embodiment of the present invention is described below with reference to Figure 5. Figure 5 shows the state in which the connection adapter 1 includes the three communication modules 20, 25, and 26. During the operation, at least the communication module 20, 25, or 26 can be included for practical use.

The connection adapter 1 includes in a housing 100 a primary control substrate 110, a secondary control substrate 200 for loading the communication module 25 in accordance with the PDC standard, a secondary control substrate 300 for loading the communication module 20 in accordance with the CDMA standard, and the communication module 26 in accordance with the PHS standard. The secondary control substrates 200 and 300, and the communication module 26 are provided as freely attached to and detached from the primary control substrate 110.

The connection adapter 1 according to an embodiment of the present invention is provided with plural types of connectors for connection to the host device for connection to plural types of main control units. Specifically, the primary control substrate 110 is provided with a connector 111 used in accordance with the RS-232C standard, a connector 112 used in accordance with the RS-485 standard, and a connector 113 used in accordance with the CAN (Controller Area Network) standard.

A primary control substrate 110 is provided with a main control unit 120 implemented by an FPGA (Field Programmable Gate Array) as a type of PLD (Programmable Logic Device), an interface circuit 131 in accordance with the RS-232C standard, an interface circuit 132 in accordance with the RS-485 standard, and an interface circuit 133 in accordance with the CAN standard. Each of the interface circuits 131, 132, and 133 is interposed between the corresponding connectors 111, 112, and 113 and the main control unit 120, respectively. Thus, the main control unit 120 can communicate with the host device connected to the connectors 111, 112, and 113 through each of the interface circuits 131, 132, and 133.

The primary control substrate 110 includes a connector 141 for connection with the secondary control substrate 200, a connector 142 for connection with the secondary control substrate 300, and a connector 143 for connection with the communication module 26 in accordance with the PHS standard. Each of the connectors 141, 142, and 143 is connected to the main control unit 120. Thus, the main control unit 120 can communicate with the communication module 25 in accordance with the PDC standard through the secondary control substrate 200. Similarly, the main control unit 120 can communicate with the communication module 20 in accordance with the CDMA standard through the secondary control substrate 300. The main control unit 120 can communicate directly with the communication module 26 in accordance with the PHS standard.

Furthermore, the primary control substrate 110 is provided with EPROM 151 storing a control program of the main control unit 120, and RAM 152 for use as various work area of the main control unit 120. Additionally, the primary control substrate 110 is provided with a module selection switch 160 for selection of the communication module 20, 25, or 26. The main control unit 120 performs an operation corresponding to the communication modules 20, 25, and 26 selected by the module selection switch 160. The configuration and the operation of the main control unit 120 are described later.

The primary control substrate 110 operates by external DC power supply. In addition, the primary control substrate 110 supplies DC power to the secondary control substrates 200 and 800, and the communication module 26 in accordance with the PHS standard through each of the connectors 141, 142, and 143. The primary control substrate 110 is provided with a power supply monitor circuit 170 for monitoring external abnormal supply of DC power, and a backup battery 171. When the power supply monitor circuit 170 detects external abnormal power supply, the circuit controls to supply power from the backup battery 171 to the primary control substrate 110, the secondary control substrates 200 and 300, and the communication module 26 in accordance with the PHS standard. In addition, when the power supply monitor circuit 170 detects external abnormal power supply, it notifies the main control unit 120 of the abnormal power supply. Furthermore, when the power supply monitor circuit 170 detects the recovery of external power supply after abnormal power supply, it notifies the main control unit 120 of the recovery.

In addition, the primary control substrate 110 is provided with a circuit initializing unit 180 for initializing and generating the internal circuit of the main control unit 120 implemented by the FPGA. The circuit initializing unit 180 contains a program for initializing and generating an internal circuit of the main control unit 120. The circuit initializing unit 180 forms a circuit configuring the main control unit 120 in the FPGA at an instruction from an externally connected terminal (not shown in the drawings).

The secondary control substrate 200 is to connect the primary control substrate 110 to the communication module 25 in accordance with the PDC standard. The secondary control substrate 200 is provided with a connector 201 for connection with the primary control substrate 110, a connector 202 for connection to a terminal 25a of the communication module 25 in accordance with the PDC standard, and an interface circuit 210 for connection between the primary control substrate 110 and the communication module 25. The interface circuit 210 converts the number of pins between the connector 202 and the connector 201, converts the assignment of pins, and generates a waveform, etc. The communication module 25 according to an embodiment of the present invention requires a predetermined memory chip storing its own telephone number information etc., and requires a dedicated backup battery. Accordingly, the memory chip 220 and the backup battery 230 are connected to the communication module 25 of the secondary control substrate 200 is connected to the communication module 25 through the connector 202. The secondary control substrate 200 is operated by a DC power supply from the primary control substrate 110 as described above, and DC power is supplied to the communication module 25 through the connector 202. An antenna connection terminal 25b of the communication module 25 is connected to an antenna connection terminal 191 attached to the housing 100.

The secondary control substrate 300 is to connect the primary control substrate 110 to the communication module 20 in accordance with the CDMA standard. The secondary control substrate 300 is provided with a connector 301 for connection to the primary control substrate 110, a connector 302 for connection to a terminal 20a of the communication module 20 in accordance with the CDMA standard, and an interface circuit 310 for connection between the primary control substrate 110 and the communication module 20. The interface circuit 310 converts the number of pins between the connector 302 and the connector 301, converts the assignment of pins, and generates a waveform, etc. In addition, the secondary control substrate 300 is operated by the DC power supply from the primary control substrate 110 as described above, and supplies DC power to the communication module 20 through the connector 302. An antenna connection terminal 20b of the communication module 20 is connected to an antenna connection terminal 192 attached to the housing 100.

A terminal 26a of the communication module 26 in accordance with the PHS standard is connected to the connector 143 of the primary control substrate 110. An antenna connection terminal 26b of the communication module 26 is connected to an antenna connection terminal 193 attached to the housing 100.

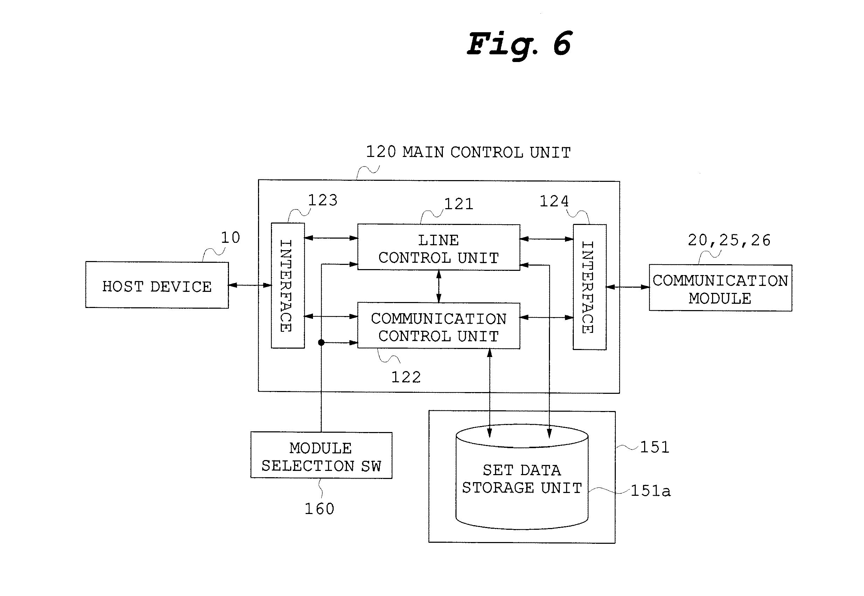

Next, the configuration and the operation of the main control unit 120 are described below with reference to Figure 6. Figure 6 is a block diagram showing the functions of the main control unit 120. Only the components related to the gist of the present invention are described, and others are omitted.

As shown in Figure 6, the main control unit 120 includes a line control unit 121 for controlling the line such as establishing a line connection etc., a communication control unit 122 for controlling data communication on the line established by the line control unit 121, an interface 123 with the host device 10, and an interface 124 with the communication modules 20, 25, and 26. The line control unit 121 controls line connection by an AT command, controls connection of an IP layer by the LCP (link control protocol) and the IPCP, and controls connection of a TCP/UDP layer. The communication control unit 122 performs a converting process of an IP address included in a header of the IP layer in the data communication on the line established by the line control unit 121.

The line control unit 121 and the communication control unit 122 switch the process depending on the communication modules 20, 25, and 26 selected by a module selection switch 160. In the present embodiment, the host device 10 is designed to directly connect and use the communication modules 25 and 26. Therefore, when the communication module 25 or 26 is selected by the module selection switch 160, the line control unit 121 and the communication control unit 122 do not perform a special process on the data between the host device 10 and the communication module 25 or 26, but only pass the data. On the other hand, when the communication module 20 is selected, the line control unit 121 and the communication control unit 122 perform converting, passing, and discarding processes according to a predetermined rule to data between the host device 10 and the communication module 20. The data required for the data processing is stored in a set data storage unit 151a of the EPROM 151.

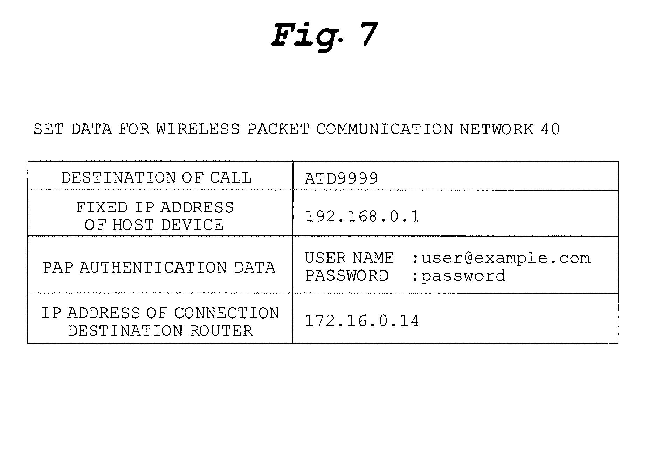

The data stored in the set data storage unit 151a is described with reference to Figure 7. As shown in Figure 7, the set data storage unit 151a stores a call issue command (including a telephone number) for connection to the wireless packet communication network 40, a fixed IP address of the host device 10, authentication data required for connection to the wireless packet communication network 40, and an IP address of the connection destination router 60.

Next, the communication procedure in this system is described below with reference to the attached drawings. First, before the description of the communication system according to an embodiment of the present invention, the communication procedure when using the premise network connection service upon which the host device 10 and the managing computer 51 are based is described below with reference to the attached drawings. As described above, since the host device 10 corresponds to the communication module 25 in accordance with the PDC standard and the first wireless packet communication network 45, the connection adapter 1 does not perform any process on the data between the host device 10 and the communication module 25. A similar operation is performed when the host device 10 is connected to the in-house LAN 50 using the communication module 26 in accordance with the PHS standard and the wireless packet communication network 46.

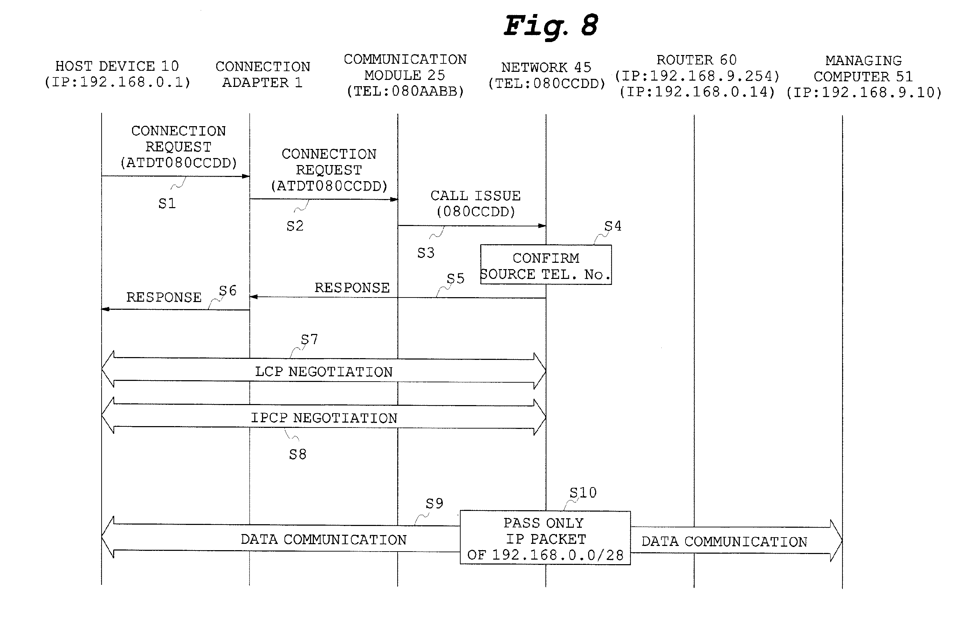

First, the case in which communication is started for the managing computer 51 from the host device 10 is described below with reference to the sequence chart shown in Figure 8.

In this example, the following contents are presumed. That is, it is assumed that the telephone number '080AABB' is assigned to the communication module 25 from the carrier. It is assumed that an IP address of 192.168.0.0/28 is distributed from the carrier, and the IP address 192.168.0.1 is assigned to the host device 10 connected to the wireless packet communication network 45 using the communication module 25. It is assumed that the IP address of the managing computer 51 of the communication partner is 192.168.9.10. The communication module 25 is assumed to be connected to the relay device of the wireless packet communication network 45 by issuing a call at an 'ATDT' command to the telephone number '080CCDD'.

As shown in Figure 8, when the host device 10 issues a 'ATDT080CCDD' command to the connection adapter 1 (step S1), the line control unit 121 of the connection adapter 1 transfers the command to the communication module 25 as it is (step S2). The trigger of the issue of the call can be the time when an IP packet of the destination address: 192.168.0.10 is generated. At the AT command, the communication module 25 issues a call to the relay device in the wireless packet communication network 45 (step S3). The relay device confirms the telephone number of the communication module 25 of the source, and rejects the connection from the terminal without a contract (step S4). Upon receipt of the response 'CONNECT' indicating that a connection is completed at the line level through the communication module 25 (step S5), the line control unit 121 of the connection adapter 1 transfers the response to the host device 10 (step S6).

Next, the host device 10 starts the process to make a connection to the in-house LAN 50 through the wireless packet communication network 45 by the PPP. Specifically, a connection to the relay device of the wireless packet communication network 45 is established at the IP level through the LCP and the IPCP (step S7 and S8). The line control unit 121 of the connection adapter 1 bidirectionally passes the packet relating to the LCP and the IPCP. Thus, the host device 10 can communicate with the in-house LAN 50 at the IP level. Therefore, the data communication using an upper protocol such as TCP/UDP etc. is started (step S9). The relay device of the wireless packet communication network 45 relays only the IP packet whose destination address or the source IP address is included in the 192.168.0.0/28 (step S10).

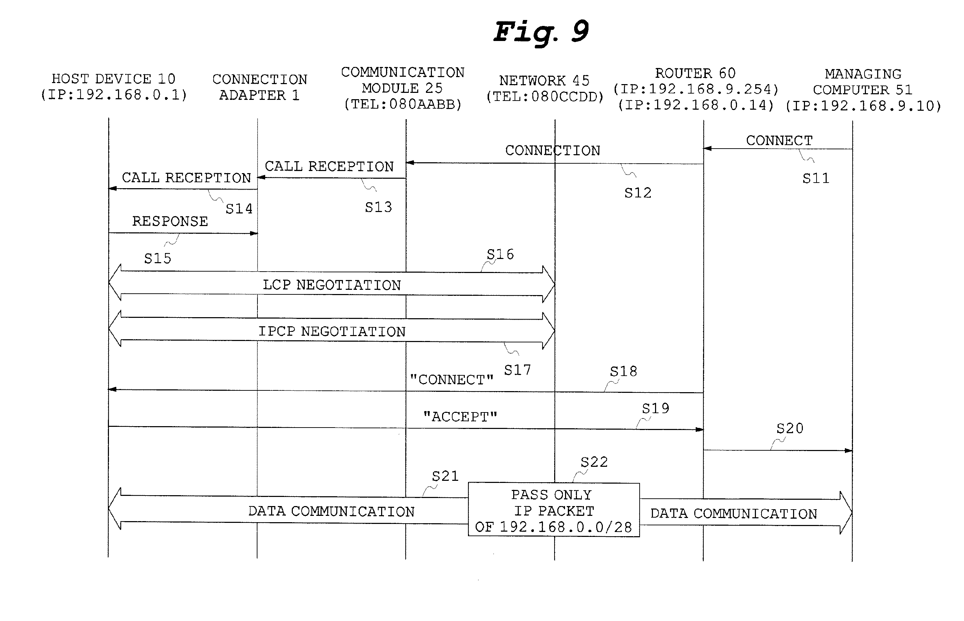

Next, the case where the communication is started on the host device 10 from the managing computer 51 is described below with reference to the sequence chart shown in Figure 9.

When the managing computer 51 issues a connection request to a fixed IP address assigned in advance to the host device 10 to communicate with the host device 10 as a communication partner (step S11), the network router 60 transmits the packet to the wireless packet communication network 40 according to the normal routing rule. Thus, the relay device of the wireless packet communication network 45 refers to the destination IP address of the packet, and makes connection to the communication module 25 of the telephone number corresponding to the IP address (step S12). The communication module 25 notifies the connection adapter 1 of the reception of a call (step S13). The connection adapter 1 relays the reception notification to the host device 10 (step S14). Next, if the connection adapter 1 receives a response to the reception notification from the host device 10 (step S15), it starts a connection establishing process by the PPP with the relay device. Specifically, the connection adapter 1 establishes a connection at the IP level to the relay device of the wireless packet communication network 45 by the LCP and the IPCP (step S16 and S17). The line control unit 121 of the connection adapter 1 passes bidirectionally the packet relating to the LCP and the IPCP. As described above, the host device 10 and the in-house LAN 50 can communicate with each other at the IP level. Therefore, data communication can be performed between them using an upper protocol such as the TCP/UDP etc. thereafter. Then, the network router 60 relays the connection request in step S11 to the host device 10 (step S18). Then, the network router 60 relays the response from the host device 10 (step S19) to the managing computer 51 (step S20). Thus, the communications can be made at the IP level between the host device 10 and the in-house LAN 50, thereby starting the data communication using an upper protocol such as the TCP/UDP etc. thereafter (step S21). The relay device of the wireless packet communication network 45 relays only the IP packets whose destination or source IP addresses are included in 192.168.0.0/28 (step S22).

Next, the case in which the communication module 20 and the wireless packet communication network 40 in accordance with the CDMA standard are used without reforming or changing the host device 10 or the managing computer 51 is described below with reference to the attached drawings.

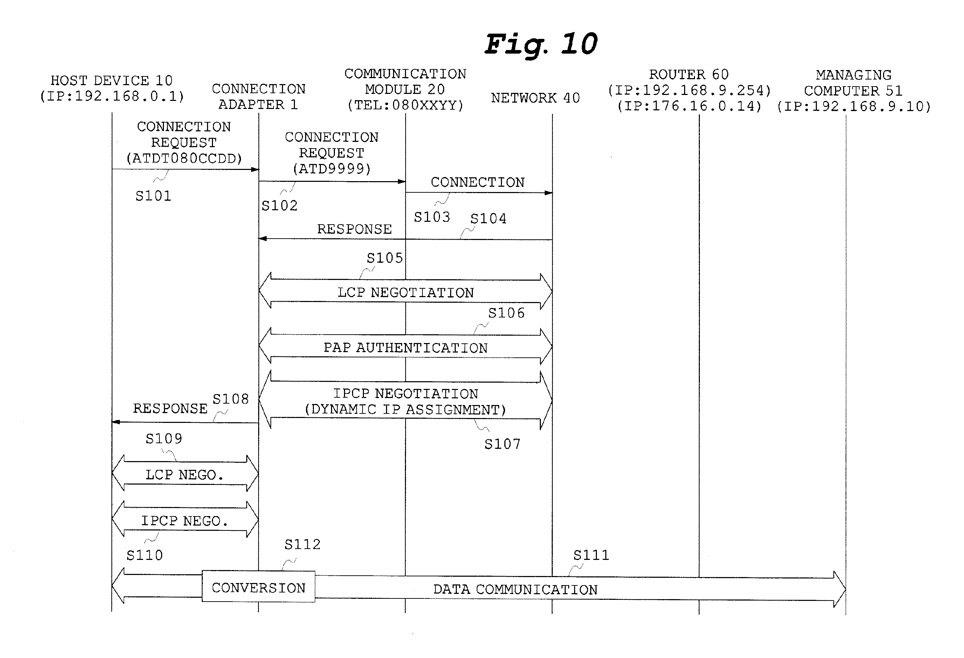

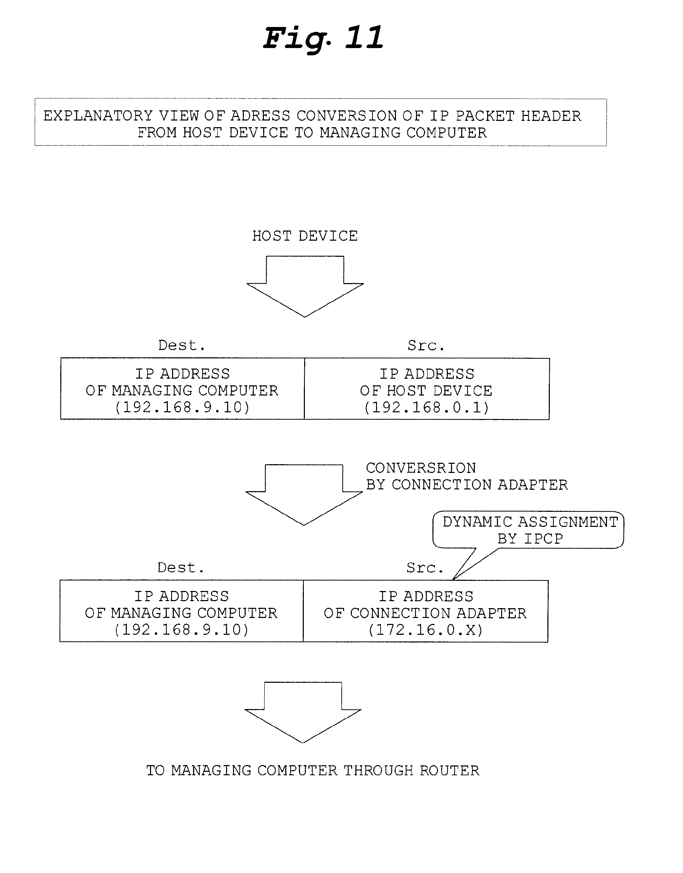

The communication procedure with the present system is described below with reference to the attached drawings. First, with reference to Figures 10 and 11, the case in which communications are started from the host device 10 to the managing computer 51 is described. Figure 20 is a sequence chart when communications are started from the host device to the managing computer. Figure 11 is an explanatory view of the converting process of the IP address described at the header of the IP packet transmitted from the host device.

As shown in Figure 10, when the host device 10 issues an 'ATDT080CCDD' command to the connection adapter 1 (step S101), the line control unit 121 of the connection adapter 1 converts the command into 'ATD9999', and transfers it to the communication module 20 (step S102). The trigger of the issue of the command is the time when the IP packet addressed to 192.168.9.10 as shown in Figure 11 is generated, etc. BY the AT command, the communication module 20 issues a call to the relay device 41 in the wireless packet communication network 40 (step S103). Upon receipt of the response 'CONNECT' indicating that the connection has been completed at the line level through the communication module 20 (step S104), the line control unit 121 of the connection adapter 1 starts the process of connecting the connection adapter 1 to the in-house LAN 50 through the PPP.

First, the line control unit 121 of the connection adapter 1 starts an LCP negotiation with the relay device 41 of the wireless packet communication network 40 (step S105). Next, the line control unit 121 of the connection adapter 1 performs a PAP authenticating process with the relay device 41 of the wireless packet communication network 40 (step S106). The PAP authenticating process is not supposed by the host device 10 generated for the wireless packet communication network 45. However, it is required when the wireless packet communication network 40 is used. Therefore, in the present embodiment, the connection adapter 1 performs the authenticating process on behalf of the host device 10. When the authenticating process is completed, the line control unit 121 of the connection adapter 1 starts an IPCP negotiation between the connection adapter 1 and the relay device 41 of the wireless packet communication network 40 (step S107). Thus, the IPCP negotiation is completed, and a dynamic IP address 172.16.0.X is assigned from the wireless packet communication network 40 to the line control unit 121 of the connection adapter 1. The assigned IP address is predetermined for the communication module 20 as a connection terminal as described above. The assigned dynamic IP address is stored in the storage means such as the EPROM 151.

When the PPP negotiation is completed, a response 'CONNECT' indicating that the connection has been completed at the line level is transmitted to the host device 10 (step S108). The host device 10 receives the response, and starts LCP negotiation and the IPCP negotiation (steps S109 and S110). The point to note is that the line control unit 121 of the connection adapter 1 issues a response to the host device 10. Thus, it seems to the host device 10 that the connecting process is being performed with the wireless packet communication network 45 described above with reference to Figure 8.

Since the connection between the host device 10 and the in-house LAN 50 is completed in the above-mentioned process, the host device 10 starts data communications to the managing computer 51 (step S111). The communication control unit 122 of the connection adapter 1 performs an address conversion on the header of the IP packet (step S112). Specifically, as shown in Figure 11, the fixed terminal IP address (192.168.0.1) and the dynamic terminal IP address (172.16.0.X) are mutually converted. With the process above, the communication with the managing computer 51 can be established which starts from the host device 10.

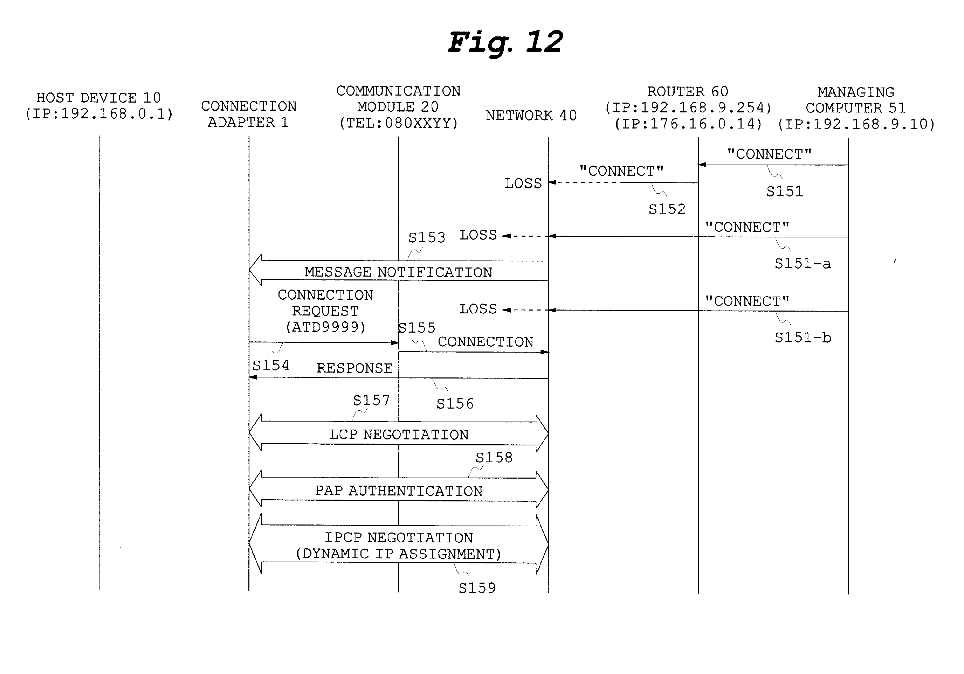

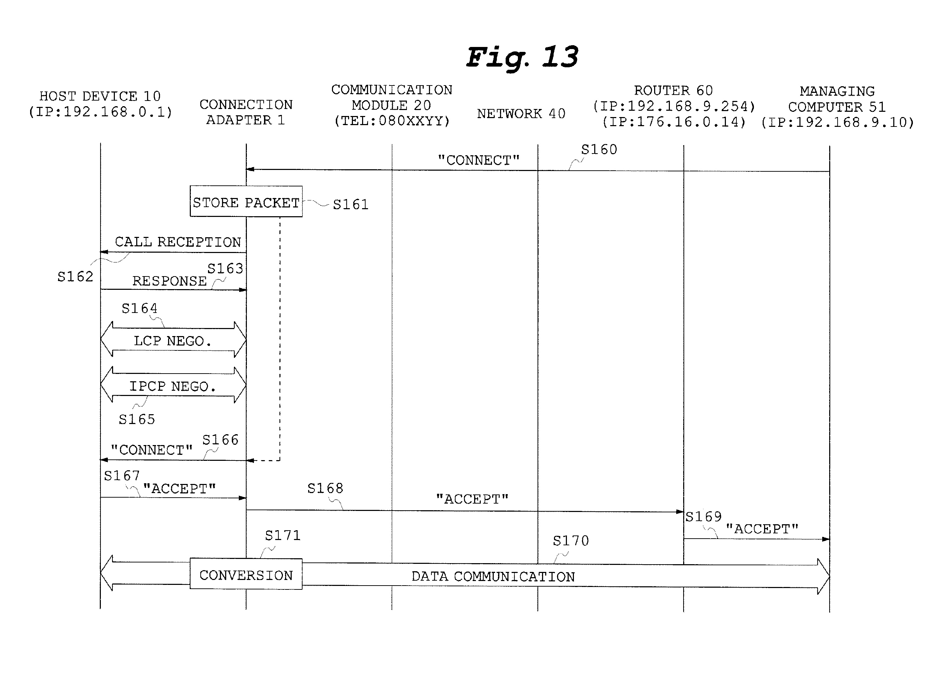

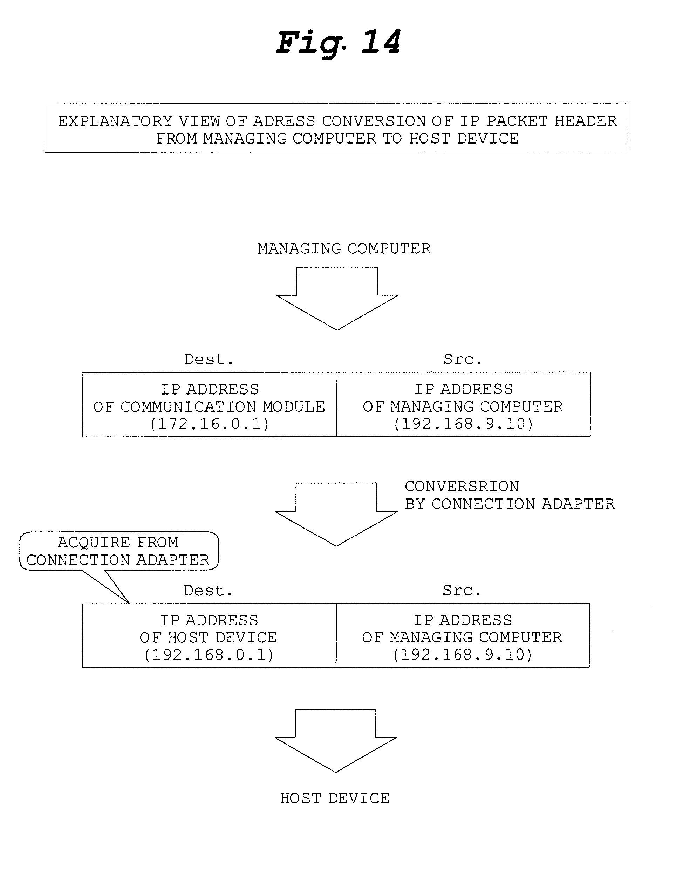

Next, the case in which communications are started from the managing computer 51 of the in-house LAN 50 to the host device 10 is described with reference to Figures 12 and 13. Figures 12 and 13 are sequence charts of the communications to be started from the managing computer. Figure 14 is an explanatory view of the step of converting an address.

In this process, it is assumed that the IP address 172.16.0.1 is assigned in the address management server 43 to the communication module 20 connected to the host device 10.

When the managing computer 51 issues a connection request addressed to the IP address 172.16.0.1 of the communication module 20 connected to the host device 10 to communicate with the host device 10 as a communication partner (step S151), the network router 60 relays the packet to the wireless packet communication network 40 according to the normal routing rule (step S152). Here, the TCP packet as an upper layer of the IP packet has a SYN flag turned on, and the ACK flag turned off of the TCP header. The wireless packet communication network 40 according to the present embodiment is assumed to be a standard in which the first TCP packet relayed to the wireless packet communication network 40 has been unconditionally discarded. Therefore, since the managing computer 51 cannot receive a response corresponding to the communication start TCP packet within a predetermined time, it retransmits the communication start TCP packet (step S151-a).

The wireless packet communication network 40 refers to the destination IP address of the packet received through the network router 60 (step S151-a), acquires the telephone number corresponding to the IP address from the address management server 43, and then transmits a message that the connection request is received from the in-house LAN 50 to the telephone number through the messaging service (step S153). The wireless packet communication network 40 discards upon timeout a packet relating to the connection request received through the network router 60.

The line control unit 121 of the connection adapter 1 that has received a message starts a connecting process to the first in-house LAN 50 on the basis of the set data stored in the set data storage unit 151a. Specifically, it transmits an 'ATD9999' command to the communication module 20 (step S154). At the AT command, the communication module 20 issues a call to the relay device 41 in the wireless packet communication network 40 (step S155). Upon receipt of a response 'CONNECT' indicating that the connection has been completed at the line level through the communication module 20, the line control unit 121 of the connection adapter 1 (step S156), the process of connecting the connection adapter 1 to the in-house LAN 50 is started by the PPP.

First, the line control unit 121 of the connection adapter 1 starts the LCP negotiation with the relay device 41 of the wireless packet communication network 40 (step S157). Next, the line control unit 121 of the connection adapter 1 performs the PAP authenticating process with the relay device 41 of the wireless packet communication network 40 (step S158). Next, the line control unit 121 of the connection adapter 1 starts the IPCP negotiation between the connection adapter 1 and the relay device 41 of the wireless packet communication network 40 (step S159). Thus, the IPCP negotiation is completed, and a dynamic IP address 172.16.0.X is assigned to the line control unit 121 of the connection adapter 1 from the wireless packet communication network 40. The assigned IP address is predetermined to the communication module 20 as a connection terminal as described above. The assigned dynamic IP address is stored in the storage means such as the EPROM 151 etc.

When the PPP negotiation is completed, a connection request packet from the managing computer 51 reaches the connection adapter 1 (step S160). As described above, the wireless packet communication network 40 has discarded the packet transmitted by the managing computer 51 in step S151. Therefore, the managing computer 51 cannot receive a response of the connection request packet, and retransmits a connection request packet upon timeout (step S151-a,b). In addition, since some time is required for the processes in steps S153 to S159, the retransmitted packet further reaches timeout (step S151-a,b). Therefore, the connection request packet reaching the connection adapter 1 is the latest packet in the packets retransmitted several times. In the present embodiment, the retransmission interval from step S151 to S151-a is 3 seconds, the retransmission interval from step S151-a to S151-b is 6 seconds, and the retransmission interval from step S151-b to S160 is 12 seconds. The retransmission interval depends on the implementation of the TCP/IP stack in the managing computer 51.

Upon receipt of the connection request packet from the managing computer 51, the line control unit 121 of the connection adapter 1 stores the connection request packet in the storage means such as the RAM 152 (step S161), and notifies the host device 10 of the reception (step S162). Upon receipt of the reception notification, the host device 10 notifies the connection adapter 1 of the response to the reception notification (step S163), and starts the LCP negotiation and the IPCP negotiation (steps S164, S165). The point to note is that the line control unit 121 of the connection adapter issues a response 1 to the host device 10. Thus, it seems to the host device 10 that the connecting process is being performed with the wireless packet communication network 45 described above with reference to Figure 9.

When the PPP negotiation is completed, the line control unit 121 of the connection adapter 1 transfers the connection request packet temporarily stored in the RAM 152 in step S161 to the host device 10 (step S166). Upon receipt of the connection request packet, the host device 10 issues the response to the connection adapter 1 (step S167). The connection adapter 1 relays the response packet to the router 60 (step S168). The router 60 relays the response packet to the managing computer 51 according to the normal routing rule (step S169).

With the process above, the host device 10 completes the connection to the managing computer 51, and starts the data communication to the managing computer 51 (step S170). The communication control unit 122 of the connection adapter 1 performs an address conversion on the header of an IP packet (step S171). Specifically, as shown in Figure 14, a fixed terminal IP address (192.168.0.1) and a dynamic terminal IP address (172.16.0.1) are mutually converted.

As described above in detail, in the system according to the present embodiment, the network connection service of assigning a dynamic IP address can be used without changing or reforming the host device 10 and the managing computer 51 that use the network connection service of assigning a fixed IP. To be more concrete, although the network connection service of assigning a dynamic IP address is used, communications can be started from the managing computer 51 to the host device 10. In addition, the source IP address of a packet received by the managing computer 51 is the fixed IP address assigned to the host device 10 in advance. Therefore, the managing computer 51 can identify a communication partner even if communications are started from the host device 10 to the managing computer 51.

In addition, since the connection adapter 1 according to the present embodiment converts, discards, and passes data transmitted between the host device 10 and the communication modules 20, 25, and 26 so that the data can be correctly processed in each equipment, various differences among the protocol service communication modules 20, 25, and 26 in the wireless packet communication networks 40, 45, and 46 can be appropriately absorbed.

Furthermore, the connection adapter 1 according to the present embodiment temporarily stores a communication start TCP packet received from the wireless packet communication network 40, and when the host device 10 enters a communication state, the connection adapter 1 transmits the temporarily stored communication start TCP packet to a host device. That is, the host device 10 receives the TCP packet without waiting for the retransmission of the communication start TCP packet by the managing computer 51. Thus, the communication start time between the host device 10 and the managing computer 51 can be shortened.

An embodiment of the present invention has been described above in detail, but the present invention is not limited to this application. For example, although a telemetering system for managing a vending machine in the above-mentioned embodiment, the present invention can be realized in other telemetering systems and telematics systems.

Also in the above-mentioned embodiment, the PDC standard, the CDMA standard, and the PHS standard are exemplified as communication modules, but other standards can be used in embodying the present invention. Similarly, any other interface standards on the host device side than those listed above can be applied.

Furthermore, in each of the above-mentioned embodiments, an authenticating method, an address system, an address assigning method (assigning a fixed IP address or a dynamic IP address) have been exemplified as differences between the network connection service in the wireless packet communication networks 45 and 46 and the network connection service in the wireless packet communication network 40. However, the present invention can be applied when a difference is one of them or a combination of them. Furthermore, other differences can be absorbed by the connection adapter as necessary. For example, in the above-mentioned embodiment, a PAP authentication is performed by the wireless packet communication network 40. However, for example, when a connection is made to a communication network in which a CHAP (Challenge Handshake Authentication Protocol) authentication is performed, the CHAP can be implemented to the connection adapter.

Furthermore, in each of the above-mentioned embodiments, the connection adapter 1 includes three communication modules 20, 25, and 26 to make the wireless packet communication networks 40, 45, and 46 arbitrarily available, but one of the communication modules 20, 25, and 26 can be included and connected.

## Claims

1. A connection adapter for communication device, comprising:
a first interface for connection to communication equipment for a wireless packet communication network;
a second interface for connection to a host device for performing communications using a TCP/IP through the communication equipment;
a line control unit for controlling a line between the host device and the wireless packet communication network; and
a communication control unit for relaying the communication by the host device using the communication equipment, wherein:
upon receipt of a communication start TCP packet addressed to the host device from the wireless packet communication network after the establishment of the connection to the wireless packet communication network, the line control unit (a) temporarily stores the communication start TCP packet in predetermined storage means, (b) notifies the host device of the reception, (c) performs a response process on behalf of the wireless packet communication network in response to the connecting process to be started by the host device, and (d) transmits the communication start TCP packet stored in the storage means to the host device when the connecting process by the host device is completed.

2. The connection adapter for communication device according to claim 1, wherein:
when the line control unit receives a message in the messaging service, a source of the message is identified from the message, and a connecting process to the wireless packet communication network is started so as to establish communications with the source.

3. The connection adapter for communication device according to claim 1 or 2, wherein:
the communication start TCP packet is formed by a TCP packet having a SYN flag turned ON and an ACK flag turned OFF of the TCP header.
